# EUROPÄISCHE PATENTSCHRIFT

(11) **EP 0 599 156 B1**
(45) Veröffentlichungstag und Bekanntmachung des Hinweises auf die Patenterteilung: **05.02.1997**
(21) Anmeldenummer: 93118346.1
(22) Anmeldetag: 12.11.1993
(51) Int. Cl.: F16H 55/30

(54) **Selbsteinstellendes Kettenrad**
Selfadjusting sprocket
Pignon à chaîne à ajustement automatique

(30) Priorität: 26.11.1992 DE 4239650; 26.05.1993 DE 4317461
(43) Veröffentlichungstag der Anmeldung: 01.06.1994
(73) Patentinhaber: Herkenrath, Karl, D-66121 Saarbrücken (DE)
(72) Erfinder: Herkenrath, Karl, D-66121 Saarbrücken (DE)
(74) Vertreter: Happe, Otto, Dipl.-Ing.

(56) Entgegenhaltungen:
- WO-A-88/03624
- DE-A- 4 004 757
- DE-U- 7 910 220
- US-A- 2 824 458
- US-A- 4 058 023
- SOVIET INVENTIONS ILLUSTRATED Section PQ, Week 8437, 24. Oktober 1984 Derwent Publications Ltd., London, GB; Class Q, AN 84-229509/37 & SU-A-1 065 638 (KIEV POLY) 7. Januar 1984

## Beschreibung

Die Erfindung betrifft ein aus Zahnsegmenten gebildetes Kettenrad, wobei die in Umfangsrichtung hintereinander angeordneten Zahnsegmente an einem Grundkörper befestigt und selbsteinstellend ausgebildet sind. Ein solches Kettenrad ist insbesondere für Laschenketten und Rundgliederketten geeignet.

Herkömmliche Kettenräder bestehen in der Regel aus Scheiben oder Ringen, in deren äußerem Umfangsbereich Zähne vorgesehen sind. Insbesondere bei Rundgliederketten sind Fertigungstoleranzen zwischen den einzelnen miteinander verbundenen Kettengliedern gegeben, die bei der Umlenkung um das Kettenrad infolge unterschiedlicher Teilung zu einem erhöhten Verschleiß sowohl an den Kettengliedern als auch an den Zähnen des Kettenrades führen. Bei den bekannten Kettenrädern ist es ferner nachteilig, daß infolge der vorgenannten Toleranzen sowie dem sich kurzfristig einstellenden Verschleiß nicht alle Zähne des Kettenrades gleichmäßig in Kraftrichtung belastet werden.

Durch das deutsche Gebrauchsmuster 75 30 444 ist ein Kettenrad bekannt, das aus einem im wesentlichen zylindrischen metallenen Kettenradkörper besteht, der an seinem äußeren Umfang radial nach außen weisende Segmente trägt. Die Segmente bestehen aus Hartgummi, Kunststoff o. dgl. und sind beidseitig der Stirnflächen des Kettenradkörpers mittels Schrauben lösbar befestigt. Obwohl bei diesem bekannten Kettenrad die Segmente aus Gründen des Verschleißes lösbar an dem Kettenradkörper befestigt und somit austauschbar sind, stellt sich doch verhältnismäßig schnell ein Verschleiß ein, so daß die betreffende Anlage sehr oft zu Austauschzwecken stillgesetzt werden muß.

Ein anderes Kettenrad ist durch das deutsche Gebrauchsmuster 79 10 220 bekannt. Dieses Kettenrad dient insbesondere zum Antrieb für Gleiskettenfahrzeuge. Bei diesem Kettenrad sind in sich starre Übertragungsglieder beweglich angeordnet und stützen sich gegen ein oder mehrere elastische Formteile ab. Eine Selbsteinstellung der Übertragungsglieder ist bei diesem Kettenrad nur in sehr engen Grenzen möglich. Für Laschenketten und Rundgliederketten ist dieses Kettenrad nicht geeignet.

Der Erfindung liegt die Aufgabe zugrunde, die Nachteile der bekannten Kettenglieder zu vermeiden und ein Kettenrad zu schaffen, das eine wesentlich höhere Standzeit sowohl der Kette als auch des Kettenrades bzw. der Zahnsegmente gewährleistet.

Die Lösung der gestellten Aufgabe besteht bei einem Kettenrad der eingangs genannten Art darin,
- daß die Zahnsegmente jeweils um eine im wesentlichen parallel zur Längsachse des Kettenrades verlaufende Achse in Umfangsrichtung dreh- bzw. kippbar sind,
- daß die Zahnsegmente in Umfangsrichtung verlaufende Ansätze aufweisen, die derart ausgebildet sind, daß beim Drehen bzw. Kippen eines Zahnsegmentes mindestens ein Ansatz dieses Zahnsegmentes sich gegen einen Ansatz eines benachbarten Zahnsegmentes abstützt,
- und daß zwischen jedem Ansatz eines Zahnsegmentes und dem entsprechenden Ansatz des benachbarten Zahnsegmentes ein radialer Abstand vorgesehen ist.

Vorteilhafte Weiterbildungen des Erfindungsgegenstandes sind in den Unteransprüchen 2 bis 8 beschrieben.

Bei dem erfindungsgemäßen Kettenrad ist somit jedes einzelne Zahnsegment z. B. bei vertikaler Anordnung des Grundkörpers um eine Horizontalachse gegenüber dem Grundkörper dreh- bzw. kippbar gelagert, wobei die Zahnsegmente in ihrer Form derart ausgestaltet sind, daß jedes Zahnsegment die durch die Glieder der Kette darauf ausgeübte Dreh- bzw. Kippbewegung auf das in Umfangsrichtung nachfolgende Zahnsegment überträgt. Infolge der Dreh- bzw. Kippbewegung der einzelnen Zahnsegmente können durch bedingte Toleranzen und Dehnungen in den Ketten im Betriebszustand unmittelbar am Kettenrad ausgeglichen werden, da nun sämtliche Zahnsegmente in gleicher Weise beaufschlagt werden. Um eine elastisch nachgiebige Dreh- bzw. Kippbewegung der einzelnen Zahnsegmente zu erreichen, kann zwischen den Kontaktflächen im Überlappungsbereich benachbarter Zahnsegmente mindestens ein Federelement vorgesehen sein.

Die Kraftübertragung von Zahnsegment zu Zahnsegment erfolgt in der Weise, daß der erste Zahn, der in Eingriff mit einem Kettenglied ist, durch eine Dreh- bzw. Kippbewegung um die Horizontalachse den in Umfangsrichtung folgenden Zahn nach außen entgegen der Kraftrichtung bewegt, bis auch dieser Zahn die gleiche Belastung übertragen kann. Nunmehr bewegen sich die die beiden ersten Zähne aufweisenden Zahnsegmente wieder in Kraftrichtung, wobei das zwischengeschaltete Federelement, das zwischen den Ansätzen im Überlappungsbereich der einzelnen Zahnsegmente vorgesehen ist, elastisch verformt wird. Die Bewegung der beiden ersten Zahnsegmente erfolgt solange, bis auch der nachfolgende dritte Zahn die gleiche Belastung wie die beiden ersten Zähne überträgt. Dieser Vorgang setzt sich über alle in Eingriff stehenden Zahnsegmente fort, bis sämtliche Zahnsegmente unter gleicher Belastung stehen.

Diejenigen Zahnsegmente, die nicht belastet werden, übertragen infolge der Dreh- und Kippbewegung der einzelnen Zahnsegmente die Belastung weiter auf den nächsten Zahn u.s.w. bis zum letzten Zahn und somit schließlich wieder auf den ersten. Fertigungstoleranzen bzw. sich im Betriebszustand ergebende Längungen der Kette spielen somit keine Rolle mehr, zumal sich sämtliche Zahnsegmente wie bei einer Hebelwaage mit Federelement dem jeweiligen Maß der einzelnen Kettenglieder anpassen. Die Standzeiten der Kette und des Kettenrades können dadurch um ein Vielfaches erhöht werden, wodurch letztlich die Betriebskosten der jeweiligen Anlage gesenkt werden können.

Die Erfindung ist anhand der Zeichnung näher erläutert. Es zeigen:

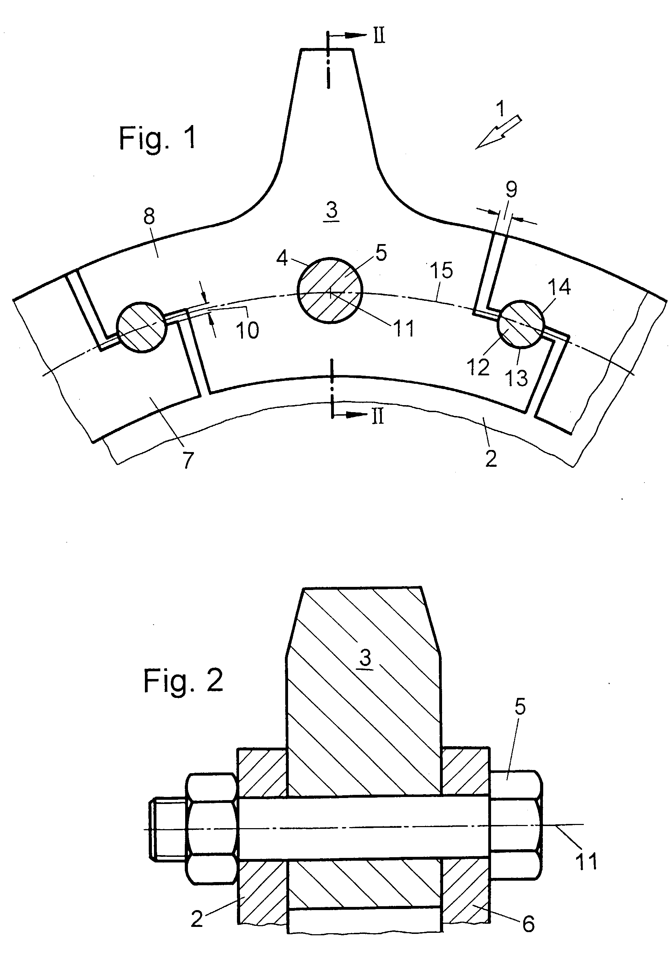

- Fig. 1: einen Ausschnitt aus einem Kettenrad in schematischer Darstellung;
- Fig. 2: einen Querschnitt durch das Kettenrad nach der Linie II-II in Fig. 1.

Das Kettenrad 1 besteht im wesentlichen aus einem Grundkörper 2, an dessen äußerem Umfang eine Vielzahl von Zahnsegmenten 3 angeordnet ist. Der Grundkörper 2 und die Zahnsegmente 3 weisen etwa auf halber Umfangshöhe eine Bohrung 4 für ein Befestigungselement 5 auf. Auf der dem Grundkörper 2 gegenüberliegenden Seite der Zahnsegmente 3 ist ein scheibenförmiges Bauteil 6 vorgesehen.

Andere Ausgestaltungen des Grundkörpers 2 sowie der Zahnsegmente 3 und des scheibenförmigen Bauteils 6 sind natürlich ebenfalls denkbar.

Bei dem dargestellten Ausführungsbeispiel sind die Zahnsegmente 3 asymmetrisch, wodurch untere Ansätze 7 und obere Ansätze 8 gebildet werden. Die Ansätze 7 und 8 der Zahnsegmente 3, die auch symmetrisch sein können, weisen in Umfangsrichtung einen Abstand 9 voneinander auf, wobei die unteren Ansätze 7 sowie die oberen Ansätze 8 benachbarter Zahnsegmente 3 einen radialen Abstand 10 voneinander aufweisen. Somit ist jedes Zahnsegment 3 um die Achse 11 des Befestigungselementes 5, die parallel zur Längsachse des Grundkörpers 2 verläuft, dreh- bzw. kippbar ausgebildet, wobei der Kippwinkel durch den radialen Abstand 10 bestimmt ist. Bei dem dargestellten Ausführungsbeispiel ist im Bereich der Ansätze 7 und 8 jeweils ein elastisch nachgiebiges Federelement 12 vorgesehen, das die Form eines Bolzens hat. Durch das Federelement 12 wird ein Aneinanderschlagen der Ansätze 7 und 8 vermieden. Das Federelement 12 ist in Ausnehmungen 13 und 14 gehalten, die in den Ansätzen 7 und 8 der Zahnsegmente 3 vorgesehen sind. Die Federelemente 12 sind vorzugsweise auf dem gleichen Teilkreis 15 wie die in dem Grundkörper 2 und den Zahnsegmenten 3 vorgesehenen Bohrungen 4 angeordnet.

Infolge der Dreh- und Kippbewegung jedes Zahnsegmentes 3 um die Achse 11 kann der Eingriff der nicht dargestellten Kettenglieder von einem auf zwei Zähne bzw. Zahnsegmente 3 verteilt werden, wodurch sich eine gleichmäßige Belastung der Zahnsegmente 3 in Umfangsrichtung ergibt. Die Fertigungtoleranzen der nicht dargestellten Kette bzw. der Kettenglieder sowie die nicht zu vermeidenden Längenänderungen der Kette im Betriebszustand werden durch die geschilderten Maßnahmen ausgeglichen. Die Zahnsegmente 3 passen sich durch die Dreh- bzw. Kippbewegung um die Achse 11 nach Art einer Hebelwaage mit Federelement diesen Gegebenheiten an.

## Patentansprüche

1. Aus Zahnsegmenten (3) gebildetes Kettenrad, wobei die in Umfangsrichtung hintereinander angeordneten Zahnsegmente an einem Grundkörper (2) befestigt und selbsteinstellend ausgebildet sind,
**dadurch gekennzeichnet,**
1.1 daß die Zahnsegmente (3) jeweils um eine im wesentlichen parallel zur Längsachse des Kettenrades (1) verlaufende Achse (11) in Umfangsrichtung dreh- bzw. kippbar sind,
1.2 daß die Zahnsegmente (3) in Umfangsrichtung verlaufende Ansätze (7, 8) aufweisen, die derart ausgebildet sind, daß beim Drehen bzw. Kippen eines Zahnsegmentes (3) mindestens ein Ansatz (7) dieses Zahnsegmentes (3) sich gegen einen Ansatz (8) eines benachbarten Zahnsegmentes (3) abstützt,
1.3 und daß zwischen jedem Ansatz (7) eines Zahnsegmentes (3) und dem entsprechenden Ansatz (8) des benachbarten Zahnsegmentes (3) ein radialer Abstand (10) vorgesehen ist.

2. Kettenrad nach Anspruch 1, dadurch gekennzeichnet, daß die einzelnen, in Umfangsrichtung hintereinander angeordneten Zahnsegmente (3) einen Abstand (9) voneinander aufweisen.

3. Kettenrad nach Anspruch 1 oder 2, dadurch gekennzeichnet, daß die einzelnen Zahnsegmente (3) etwa auf halber Umfangshöhe mit einer Bohrung (4) für ein Befestigungselement (5), beispielsweise für eine Schraube, versehen sind.

4. Kettenrad nach Anspruch 1, 2 oder 3, dadurch gekennzeichnet, daß im Bereich zwischen jedem Ansatz (7) eines Zahnsegmentes (3) und dem entsprechenden Ansatz (8) des benachbarten Zahnsegmentes (3) mindestens ein Federelement (12) vorgesehen ist.

5. Kettenrad nach Anspruch 4, dadurch gekennzeichnet, daß das Federelement (12) in einander gegenüberliegenden Ausnehmungen (13, 14) von benachbarten Zahnsegmenten (3) angeordnet ist.

6. Kettenrad nach Anspruch 4 oder 5, dadurch gekennzeichnet, daß das Federelement (12) auf dem gleichen Teilkreis (15) angeordnet ist wie die in den Zahnsegmenten (3) vorgesehenen Bohrungen (4).

7. Kettenrad nach Anspruch 4, 5 oder 6, dadurch gekennzeichnet, daß das Federelement (12) eine in dem durch den radialen Abstand (10) zwischen den Ansätzen (7, 8) gebildeten Zwischenraum vorgesehene elastisch nachgiebige Schicht bildet.

8. Kettenrad nach einem der Ansprüche 1 bis 7, dadurch gekennzeichnet, daß die Zahnsegmente (3) derart asymmetrisch ausgebildet sind, daß jeder Ansatz (7) eines Zahnsegmentes (3) den entsprechenden Ansatz (8) eines benachbarten Zahnsegmentes (3) überlappt.

## Claims

1. Sprocket wheel formed of toothed segments (3), wherein the toothed segments are arranged one behind the other in circumferential direction at a base body and constructed to be self-adjusting, characterised thereby,
1.1 that the toothed segments (3) are each rotatable or tiltable in circumferential direction about a respective axis (11) extending substantially parallelly to the longitudinal axis of the chain wheel (1),
1.2 that the toothed segments (3) comprise projections (7, 8), which extend in circumfential direction and are formed in such a manner that, on rotation of a toothed segment (3), at least one projection (7) of this toothed segment (3) bears against a projection (8) of an adjacent toothed segment (3)
1.3 and that a radial spacing (10) is provided between each projection (7) of one toothed segment (3) and the corresponding projection (8) of the adjacent toothed segment (3).

2. Sprocket wheel according to claim 1, characterised thereby, that the individual toothed segments (3) arranged one behind the other in circumferential direction display a spacing (9) one from the other.

3. Sprocket wheel according to claim 1 or 2, characterised thereby, that the toothed segments (3) are provided at about half the circumferential height with a bore (4) for a fastening element (5), for example for a screw.

4. Sprocket wheel according to claim 1, 2 or 3, characterised thereby, that at least one spring element (12) is provided in the region between each projection (7) of one toothed segment (3) and the corresponding projection (8) of the adjacent toothed segment (3).

5. Sprocket wheel according to claim 4, characterised thereby, that the spring element (12) is arranged in mutually opposite recesses (13, 14) of adjacent toothed segments (3).

6. Sprocket wheel according to claim 4 or 5, characterised thereby, that the spring element (12) is arranged on the same pitch circle (15) as the bores (4) provided in the toothed segments (3).

7. Sprocket wheel according to claim 4, 5 or 6, characterised thereby, that the spring element (12) forms an elastically yielding layer in the gap formed by the radial spacing (10) between the projections (7, 8).

8. Sprocket wheel according to one of the claims 1 to 7, characterised thereby, that the toothed segments (3) are constructed asymmetrically in such a manner that each projection (7) of one toothed segment (3) overlaps the corresponding projection (8) of the adjacent toothed segment (3).

## Revendications

1. Pignon à chaîne, formé de segments dentés (3), les segments dentés, disposés l'un derrière l'autre dans la direction du périmètre, étant fixés sur un corps de base (2) et étant configurés de manière à s'auto-ajuster, caractérisé en ce que:
1.1 les segments dentés (3) sont chacun aptes à pivoter ou basculer dans la direction du périmètre, autour d'un axe (11) s'étendant essentiellement parallèlement à l'axe longitudinal du pignon à chaîne (1),
1.2 les segments dentés (3) présentent des appendices (7, 8) qui s'étendent dans la direction du périmètre, qui sont configurés de telle sorte que, dans le cas du pivotement ou du basculement d'un segment denté (3), au moins un appendice (7) de ce segment denté (3) s'appuie contre un appendice (8) d'un segment denté (3) voisin,
1.3 et en ce qu'entre chaque appendice (7) d'un segment denté (3) et l'appendice (8) correspondant du segment denté (3) voisin, il est prévu un écart radial (10).

2. Pignon à chaîne selon la revendication 1, caractérisé en ce que les segments dentés (3) individuels disposés l'un derrière l'autre dans la direction du périmètre présentent un écart (9) l'un par rapport à l'autre.

3. Pignon à chaîne selon la revendication 1 ou 2, caractérisé en ce que les éléments dentés individuels (3) sont dotés, sensiblement à mi-hauteur périphérique, d'un alésage (4) pour un élément de fixation (5), par exemple une vis.

4. Pignon à chaîne selon la revendication 1, 2 ou 3, caractérisé en ce que, dans la région située entre chaque appendice (7) d'un élément denté (3) et l'appendice correspondant (8) du segment denté (3) voisin, il est prévu au moins un élément élastique (12).

5. Pignon à chaîne selon la revendication 4, caractérisé en ce que l'élément élastique (12) est disposé dans des évidements (13, 14) mutuellement opposés de segments dentés (3) voisins.

6. Pignon à chaîne selon les revendications 4 ou 5, caractérisé en ce que l'élément élastique (12) est disposé sur le même arc de cercle (15) que les alésages (4) prévus dans les segments dentés (3).

7. Pignon à chaîne selon les revendications 4, 5 ou 6, caractérisé en ce que l'élément élastique (12) forme une couche élastiquement déformable prévue dans l'espace intermédiaire formé par l'écart radial (10) entre les appendices (7, 8).

8. Pignon à chaîne selon l'une des revendications 1 à 7, caractérisé en ce que les segments dentés (3) sont configurés asymétriques de telle sorte que chaque appendice (7) d'un segment denté (3) recouvre l'appendice (8) correspondant d'un segment denté (3) voisin.
